# EUROPEAN PATENT APPLICATION

(11) **EP 2 019 367 A1**
(43) Date of publication of application: **28.01.2009**
(21) Application number: 07012686.7
(22) Date of filing: 28.06.2007
(51) Int. Cl.: G06Q 10/00

(54) **A method to improve the performance of a distributed scheduler**

(71) Applicant: SIEMENS AKTIENGESELLSCHAFT, 80333 München (DE)
(72) Inventor: Ruggieri, Vito Massimo, 16148 Genova (IT); Giebels, Mark Mathieu Theodorus, 16148 Genova (IT)
(74) Representative: Kley, Hansjörg

(57) **Abstract**

Variability in both manufacturing processes and external processes (order demands, material supplies), have a detrimental influence on production schedules. In order to improve the performance of a distributed scheduler for a manufacturing process in a level at least the activities
- Production Resource Management;
- Production Definition Management
- Detailed Production Scheduling (30)
are covered by a decision and prediction function (10) over the activities (30) which carries out an analysis of the variability of the manufacturing process. The level is preferably a level 3 in a S95 environment.

## Description

The present invention relates to a method to improve the performance of a distributed scheduler according to the preamble of claim 1.

In the world of industrial automation of today, in order to increase competitiveness, manufacturing companies need to simultaneously reduce time-to-market, increase process visibility and production flexibility, optimize forecasting and scheduling, and reduce scrap, stock levels and downtimes; all while ensuring optimal quality and production efficiency across all global facilities.

Hence in order to meet these demanding goals, manufacturing companies require an integrated IT infrastructure that helps them in coordinating production on a global scale and, if necessary, in real time. The Manufacturing Execution System MES is generally known as the IT layer that integrates the business systems (e.g. ERP) and production control systems.

As defined by the Manufacturing Enterprise Solutions Association (MESA International), the MES system «is a dynamic information system that drives effective execution of manufacturing operations», by managing «production operations from point of order release into manufacturing to point of product delivery into finished goods» and by providing «mission critical information about production activities to others across the organization and supply chain via bi-directional communication».

The functions that a MES system usually includes are resource allocation and status, dispatching production orders, data collection/acquisition, quality management, maintenance management, performance analysis, operations/detail scheduling, document control, labour management, process management and product tracking.

Thus, the goal of MES systems is to provide manufacturing companies with tools for measuring and controlling production activities with the aim of boosting profitability, increasing productivity, improving quality and process performance to manufacturing plants.

From the point of standardization the subject of this paper is also based on the following standards:
- SA-dS95.00.01-2000
   Enterprise - Control System Integration Part 1 [1]
- ISA-dS95.00.02-2000
   Enterprise - Control System Integration Part 2 [2]
- ISA-dS95.00.03-2000 Enterprise - Control System Integration Part 3 [3]

The international version is know as
ISO/IEC 62246-1
Enterprise - Control System Integration - Part 1
etc.

Variability in both manufacturing processes and external processes (order demands, material supplies), have a detrimental influence on production schedules. Since this variability is generally ignored in detailed scheduling systems, as it is in the detailed scheduling solutions within SIMATIC IT, it is impossible to optimize for robustness. SIMATIC IT is the MES system provided by Siemens. In the following context the explanation are based on SIMATIC IT but they easily can be transferred to other MES Systems.

### Discussion of prior art

Typically, variability is anticipated in detailed schedulers, if done at all, by including slack times in the schedules by the following cited techniques:
a) Planning with longer processing times than can be expected.
b) Including empty time slots in the schedules as buffers against delays.
c) Including slack times between succeeding operations within an order path. Since those slack times should be based on so-called worst case scenarios (to create a robust schedule), the slack times tend to be very significant, often much longer (4 time is not an exception) than the actual processing times. The before mentioned technique is most often done.

These above mentioned techniques require long lead times, which in turn leads to unnecessarily long delivery times to the customers and high work in process levels.

It is therefore a task of the present invention, to provide a method to improve the performance of a distributed scheduler, which method overruns the before mentioned drawbacks

The above mentioned task is solved by a method with the features given in claim 1.

The basic idea to solve this problem is that the PM-ADS takes the results or data deriving from the decision and prediction function into account while making the actual detailed schedule.

Further advantageous embodiments are defined in dependant claims.

Sigmalyzer, a new product component to be in SIMATIC IT, models this variability by learning from historical data collected in SIMATIC IT. It can also predict future problems by combining the stochastic models of variability with the future schedules from the scheduler. In a summary: The unit Sigmalyzer is able to make decisions, which are based on data collected in SIMATIC IT. In other words the unit Sigmalyzer also may predict future problems and possible blockings during a production process due to lack of capacity or material. In the context of this paper the unit Sigmalyzer is called decision and prediction function.

Therefore, by integrating the decision and prediction function with the detailed scheduling solutions in SIMATIC IT, the performance of these scheduling solutions can be improved by making them more robust against variability in the manufacturing processes. The distributed scheduling approach of the proposed Production Modeller Agent Based Detailed Scheduler PM-ADS is ideally suited for doing this because the granularity of interaction is at the agent level. Furthermore, the modelling of agents around resources and order entries on multiple hierarchical levels seamlessly fits the modelling structure of the decision and prediction function. In the following context the term «Production Modeller Agent Based Detailed Scheduler» is denoted by PM-ADS.

The agent-based architecture of the PM-ADS makes it possible to dynamically set priorities of work orders and entities as well as by varying scheduling rules defined on the various equipment levels. In order to optimize the number of iterations between the PM-ADS and the decision and prediction function, thresholds for triggering reruns of either the PM-ADS or the decision and prediction function should be defined.

Since this variability was generally ignored in detailed scheduling systems, it was impossible to optimize for robustness.

The invention is now described in further details with reference to the accompanying drawings in which are depicted:
- Fig 1: Steps of a method for the embodiment called data;
- Fig 2: Steps of a method for the embodiment called Priority;
- Fig 3: Steps of a method for the embodiment called resource reservations;
- Fig 4: Steps of a method for the embodiment called Rules;
- Fig 5: Production modeller;
- Fig 6: Interface of the decision and prediction function within the orders entries for scheduling;
- Fig 7: A decision and prediction function covering S95 functionalities.

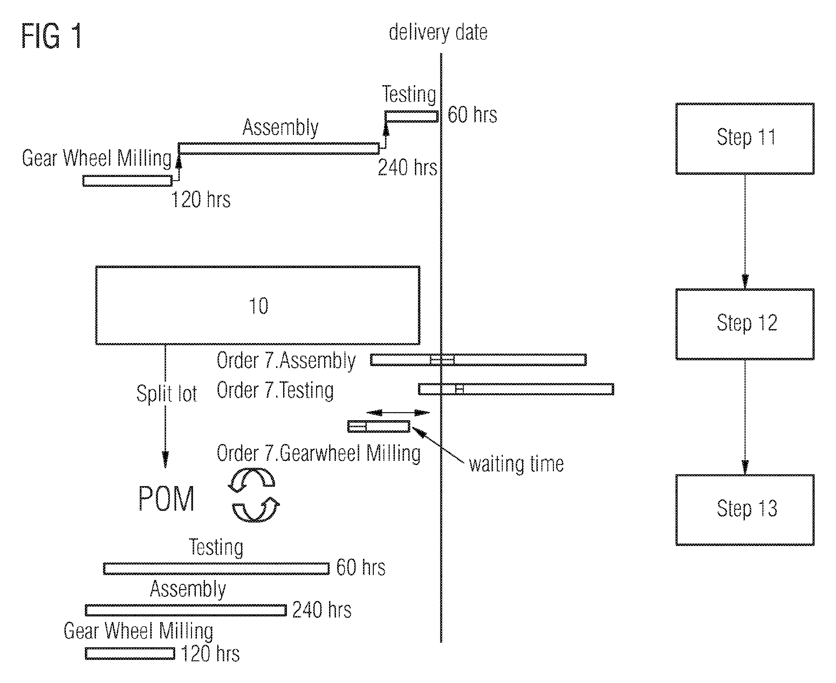

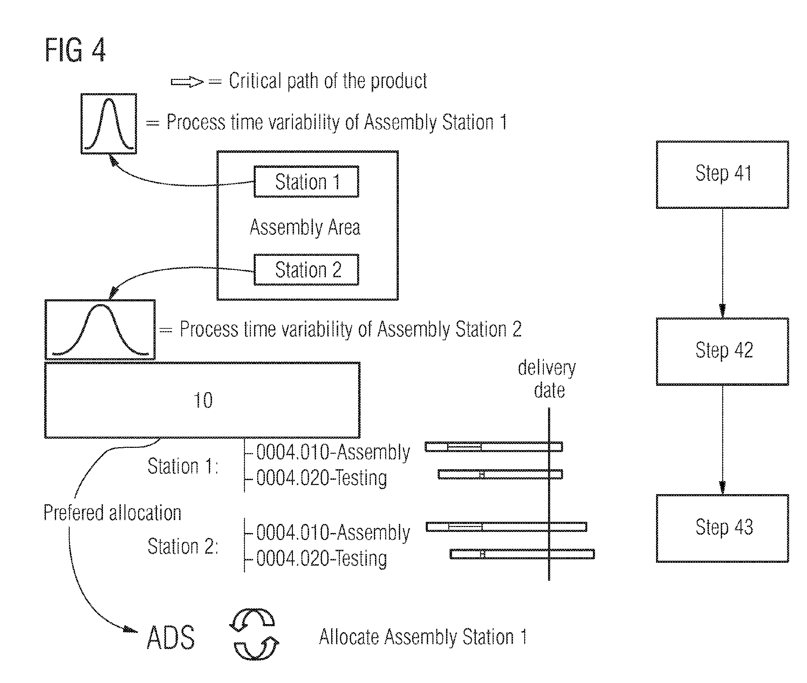

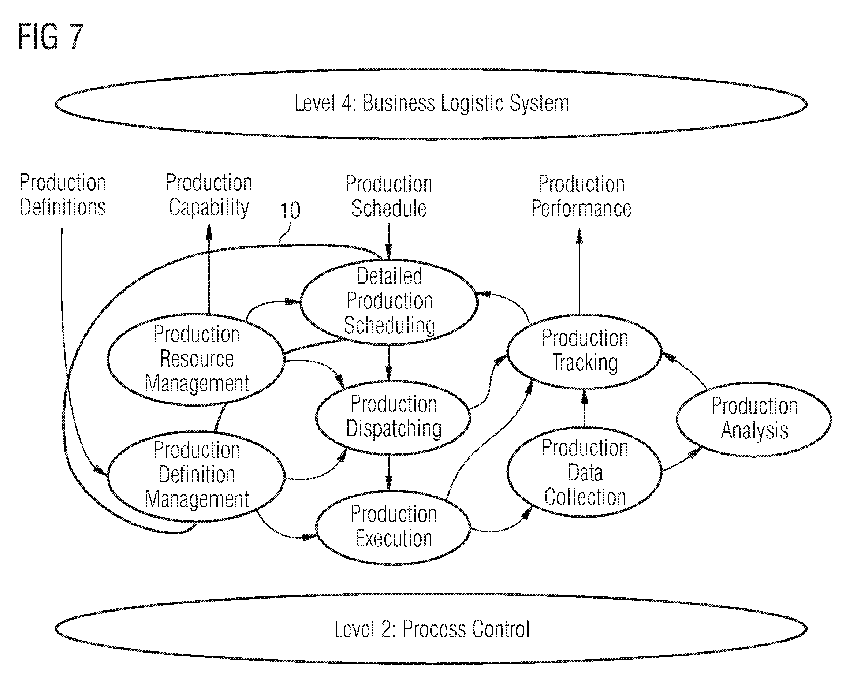

Fig 7 shows the S95 functionalities in an overview. This overview corresponds to the definitions given in ISA-dS95.00.03-2000 Enterprise - Control System Integration Part 3 «Activity Models of Manufacturing Operations Management»; [3], on p. 10, Figure 1 as well as on p. 16 Figure 4. This standard is subsequently cited as ISA-dS95.00.03-2000 [3]. Over the basic activities - see Fig 7 where the terms were derived from ISA-dS95.00.03-2000 [3]) -
- Production Definition Management;
- Production Resource Management;

Detailed Production Scheduling;
there is an overlay function denoted by the reference numeral 10. This at first called overlay function 10 is a decision and prediction function 10 covering S95 - functionalities.

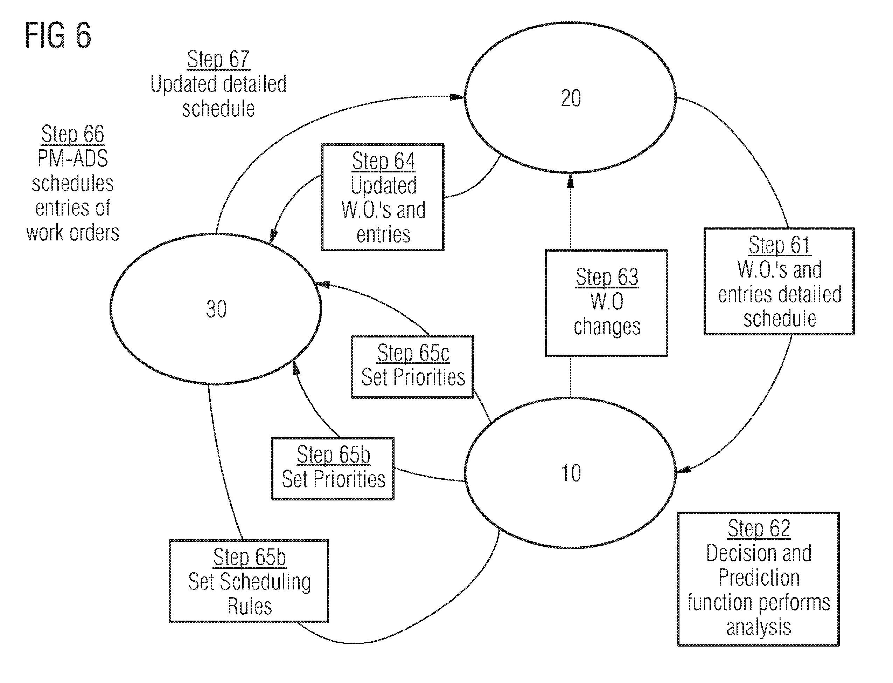

The input to this decision and prediction function 10 are shown in Fig 6 with the steps:
Step 61
   Work Orders and entries, detailed schedule issued by the Production Order Manager 20.
   The outputs from the decision and prediction function 10 are:
Step 63
   Work Orders changes directed to the Production Modeler Agent Based Detailed Scheduler.
Step 65a
   Setting Scheduling Rules directed to the Production Modeler Agent Based Detailed Scheduler PM-ADS 30.
Step 65b
   Setting Priorities directed to the Production Modeler Agent Based Detailed Scheduler 30.
Step 65c
   Making a notification for reservations to the Production Modeler Agent Based Detailed Scheduler 30.

After this definition of the principal functionality of the decision and prediction function 10 the are now four possibilities to have output from to decision and prediction function 10 to the PM-ADS 30, see the following overview:

### Embodiment 1

Data based on the Production Order Manager which is handled by a decision and prediction function.

### Embodiment 2

Priorities of the work orders are handled by a decision and prediction function.

### Embodiment 3

Resource Reservations deriving from a resource agent can reserve some capacity for uncertain operations. These reservations are handled by the decision and prediction function.

### Embodiment 4

Based on the results of the decision and prediction function, another PM-ADS 30 rules or another branch of a PM-ADS rule is activated within the SIMATIC IT Framework (Production Modeller).

The Embodiments 1 to 4 are now described and discussed in further details with the corresponding figures 1 to 4. The figures contain for the sake of simplicity the notation «step». But step does not always mean steps of an individual procedure or method. «Step nn» is sometimes just used, for explaining some properties of the involved components.

### Detailed description of embodiment 1

The input data from POM is adjusted by the Decision and prediction function based on the results of an analysis run which is executed by the Decision and prediction function just before PM-ADS 30 makes its schedule.

In Fig. 1 step 11 comprises:
A work order containing three entries is planned backwards from the delivery date in POM.

In Fig. 1 in step 12 Sigmalyzer predicts significant waiting time due to process variability between the gearwheel milling and the assembly entries.

In Fig. 1 in step 13 Sigmalyzer advises POM to split the lot into multiple sublots. In this way, assembly and testing of the first sublots can start earlier. This strategy assures that the work order is delivered in time.

This solution (adjust input data) does not require any direct interaction between the Decision and prediction function and PM-ADS 30. The interaction takes place between POM and the Decision and prediction function.

### Detailed description of embodiment 2

Priorities are defined for the work orders and/or entries to influence the scheduling process. This can be a constant priority value or a function of time: P(t). If it is a function of time, the priority value changes for different time slots. This can be useful, since the chances of late delivery of orders increases over time. E.g. For day 0, the remaining slack time is still 2 days, thus the priority is, say, 5. For day 1, the remaining slack time is only 1 day, thus the priority is, say, 10, etc. Also other stochastic profiles, like the resource loads or the material arrival distributions, vary over time.

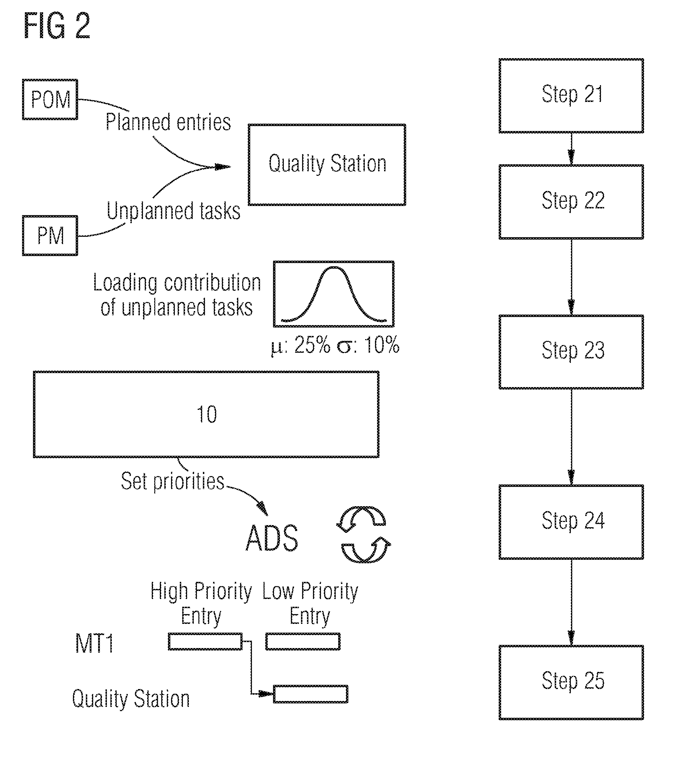

Fig. 2 discloses the following steps:
Step 21
   A Quality station is often dealing with a combination of planned and unplanned tasks coming from requests from the shop floor.
Step 22
   Therefore, the availability of the quality station is rather unpredictable.
Step 23
   The decision and prediction function Sigmalyzer models the variability based on historic data and includes this variability in the critical paths of work orders which make use of the quality station.
Step 24
   The decision and prediction function Sigmalyzer suggests higher priorities to ADS for those entries of work orders that are in most danger to be delivered late, because of waiting time at the quality station.
Step 25
   The ADS re-schedules with higher priority settings for the critical entries of those works orders.

Constant values of priorities can be defined in the SIMATIC IT Framework as variables in the rules and send to the PM-ADS when calling the scheduling methods. For priorities that are defined as a function of time, it is possible to store the function in a script or xml file, store this script or file as a variable in the SIMATIC IT Framework rules, send it to the PM-ADS in its method call and have the PM-ADS convert the script or file into a function again. In this way, no direct interaction between PM-ADS and the Decision and prediction function is necessary and all communication can go through the SIMATIC IT Framework. However, a functional integration between the Decision and prediction function and PM-ADS is necessary, since PM-ADS needs to be able to interpret the scripts of the Decision and prediction function or files and the Decision and prediction function needs to know in which ways the PM-ADS can be influenced in its decision making.

### Detailed description of embodiment 3

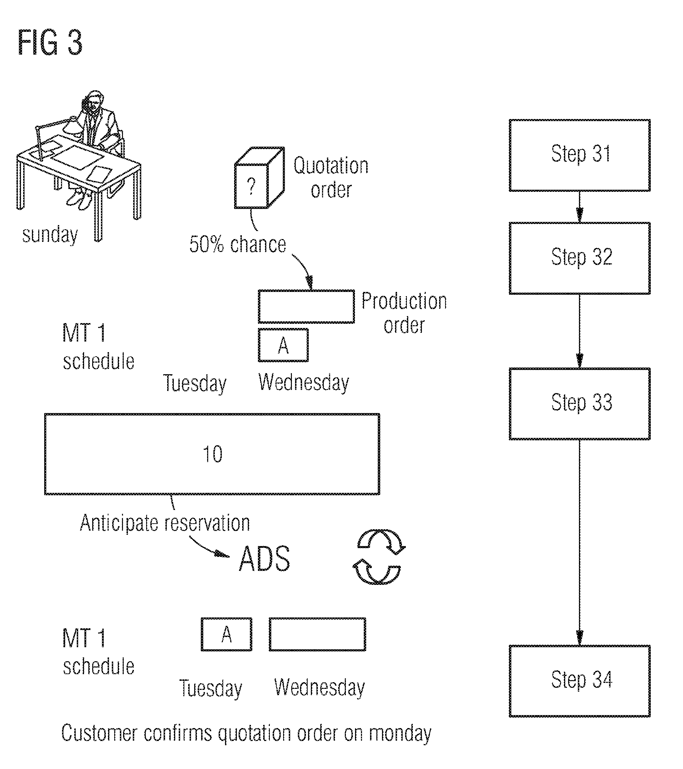

A resource agent can reserve some capacity for uncertain operations, identified by the decision and prediction function Sigmalyzer, which can come from e.g. quotation orders, forecast orders, potential maintenance activities or other activities characterized by uncertainty in execution. The easiest way to implement this behaviour is by including 'resource reservation entries', instantiated by the Decision and prediction function, which the PM-ADS schedules in the same way as regular work order entries. In more details the method is disclosed in Fig. 3:
Step 31
   There is a 50% chance that a given quotation order will become a real production order.
Step 32
   In that case MT 1 will be occupied for the complete Wednesday by this new production order. This will conflict with an already scheduled order A.
Step 33
   The decision and prediction function Sigmalyzer detects this potential problems and informs ADS via a message to anticipate a capacity reservation for the quotation order for Wednesday.
Step 34
   ADS expedites order A so that it can be scheduled on MT1 on Tuesday instead of Wednesday morning and still shipped in time to the customer on Wednesday Afternoon.

### Detailed description of embodiment 4

Based on the analysis results of the decision and prediction function 10, another PM-ADS rule or another branch of a PM-ADS rule is activated within the SIMATIC IT Framework (Production Modeller). In the engineering phase, rules that deal with the interaction between the Decision and prediction function and PM-ADS need to be defined in the SIMATIC IT Framework. Either new rules need to be created or alternative branches need to be added to existing rules. Since the rules determine a significant part of the behaviour of PM-ADS, this solution implies the strongest impact on PM-ADS by the Decision and prediction function. In order to limit the amount of engineering work and the complexity of engineering, it is highly recommended to predefine industry libraries of interaction rules that cover many scheduling situations. Those industry libraries will grow in functionality if more implementations are made, just like it is the case with the PM-ADS industry libraries. The above mentioned rule-based solution contains according to Fig. 4 the following cited interactions:
Step 41
   In the Assembly Area, an assembly and a testing operation of work order 4 have to be performed. The operations have to be allocated to one of the two Stations. The only difference between the two assembly stations is the process time variability. Station 1 is a CNC assembly station with limited variability, while Station 2 is a manual assembly station, on which the processing time can vary more significantly.
Step 42
   By analyzing the influence of the variability through the order path, the decision and prediction function Sigmalyzer determines that it is in this case better to limit the variability on the critical path, because there is a high chance that the delivery date will be violated in the manual assembly station is used.
Step 43
   The decision and prediction function Sigmalyzer sets the scheduling rules for the PM-ADS in such a way that the PM-ADS will decide to allocate the product on the more reliable CNC Assembly Station if this is possible in the schedule.

Finally the four solutions are discussed by answering the question «When to use which solution?» and stating particular advantages.

### Embodiment 1 «Data»

This solution can solve problems related to predicted late delivery of work orders. In can only be used on a work order level. It requires some flexibility in the work order to adjust delivery dates, release dates or lot sizes.

### Embodiment 2 «Priority»

This solution can be used for dealing with critical work orders and entries. The critical path analysis algorithms of the Decision and prediction function calculate chances of violating due dates of entries and work orders. The results of this analysis can be transformed into priority settings for work orders and entries in PM-ADS

### Embodiment 3 «Resource Reservation»

When activities not defined by work orders in POM are expected to be able to disrupt the schedule of work orders and entries significantly, the behaviour of resource agents needs to be influenced in order to anticipate the occurrence of such activities and make some 'capacity reservation' for them. Examples of such activities are: quotation orders, forecast orders, and potential maintenance activities

### Embodiment 4 «Rules»

This solution creates the capability to select different behaviours for resource agents based on the analysis of the Decision and prediction function. For example, this is useful for selection of alternative machine tools.

The goal of integrating the Decision and prediction function and PM-ADS is to improve the performance of the PM-ADS by making it more robust against variability in the manufacturing processes.

Since the resulting schedules will be more reliable than without the support of the Decision and prediction function, the end users benefit because there will be less disruption of the schedule on the shop floor, which will lead to higher machine utilization, higher service levels (in-time delivery of orders to the customers), and less last-minute trouble shooting, which will lower the cost of overtime work. Also, since slack times can be reduces significantly, shorter lead times are the result, as well as lower WIP (work in process).

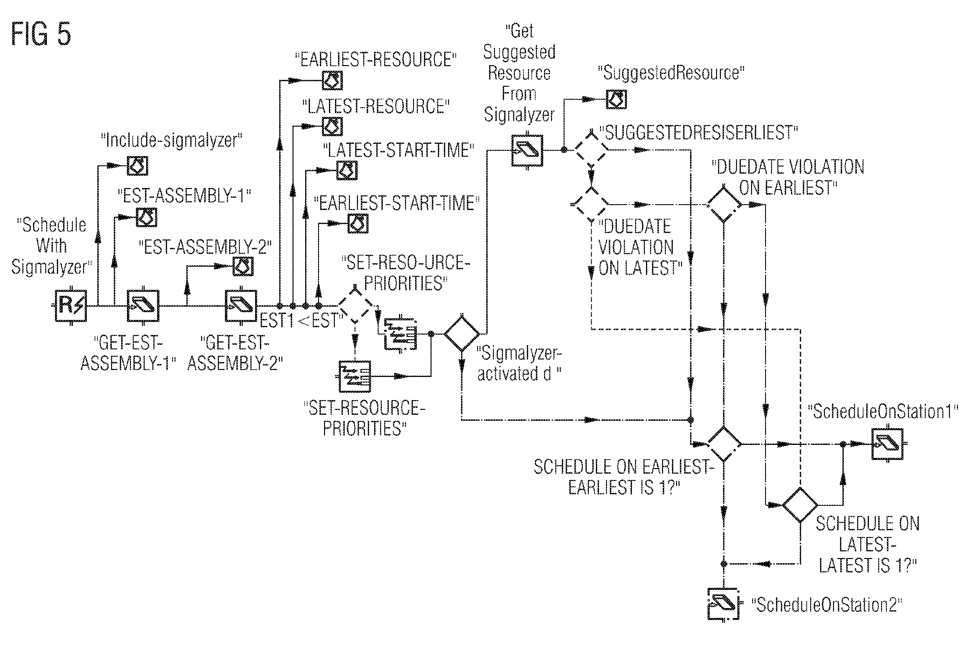

Figure 5 illustrates the prototype Production Modeller rule we have designed for this solution showing the flow for an assembly process (the flow-elements are numbered by 1 to 11):
1. The event 'ScheduleWithSigmalyzer" is triggered by the "OnRequestScheduleSlot" event which is fired by the agent of the assembly area in order to schedule an order entry to one of the resources in the assembly area.
2. The local variable "Include Sigmalyzer" is set to 1 or 0 in this demo to be able to switch cases: Execute the rule with or without asking for a suggested resource from the decision and prediction function 10. This local variable is used by the Condition "Sigmalyzer-activated?" (Flow element 7).
3. The scheduling agent of Assembly Station 1 is asked for its earliest feasible start time for the scheduled order entry. This value is stored in the local variable "EST-ASSEMBLY-1"
4. The scheduling agent of Assembly Station 2 is asked for its earliest feasible start time for the scheduled order entry. This value is stored in the local variable "EST-ASSEMBLY-2"
5. The Condition "EST1 < EST2" is used to call the right "Set Multiple Variable"
6. In the "Set Multiple variables", the local variables "EARLIEST-RESOURCE", "LATEST-RESOURCE", LATEST-START-TIME", and "EARLIEST-START-TIME" are assigned the right values.
7. The Condition "Sigmalyzer activated?" checks if the Decision and prediction function should be involved in this scheduling rule, by checking local variable "Include Sigmalyzer?". If the Decision and prediction function should not be involved, the process is scheduled on the resource that has the earliest time slot available for executing the order entry.
8. The method "Get Suggested Resource From Sigmalyzer" calls the "MinimizeLatenessofWorkOrder" method of the instantiation of the decision and prediction function 10. It gets back the suggested resource according to the decision and prediction function. This value is stored in the local variable "SuggestedResource".
9. If the "SuggestedResource" is the same as the value of the local variable "EARLIEST-RESOURCE", the order entry will be scheduled on the resource with the earliest available time slot. Otherwise, the process continues with Flow element 10.
10. The Condition "DUEDATEVIOLATIONONLATEST" checks if allocating the order entry to the latest resource (the suggested resource) will lead to a violation of the due date. If so, the process continues with Flow element 11. Otherwise, the order entry is scheduled on the earliest available time slot of the resource suggested by the Decision and prediction function.
11. The Condition "DUEDATEVIOLATIONONEARLIEST" checks if allocating the order entry to the earliest resource (the not suggested resource) will lead to a violation of the due date. If this is not the case, the order entry will be scheduled on the earliest resource even though the Decision and prediction function suggested otherwise. If it does also violate the due date on the earliest resource, then it will be scheduled on the suggested resource by the Decision and prediction function (the latest resource).

### List of referenced documents

[1] ISA-dS95.00.01-2000
   Enterprise - Control System Integration Part 1 «Models and Terminology»
[2] ISA-dS95.00.02-2000
   Enterprise - Control System Integration Part 2 «Object Model Attributes»
[3] ISA-dS95.00.03-2000
   Enterprise - Control System Integration Part 3 «Activity Models of Manufacturing Operations Management»

### List of used acronyms

- ISA: Instrumentation, Systems and Automation Society; http://www.isa.org
- MES: Manufacturing Execution System
- PM-ADS: Production Modeller Agent Based Detailed Scheduler
- POM: Production Order Manager
- Sigmalyzer: Name of a decision and prediction function

### List of Reference numerals

- 10: Decision and prediction function
- 20: Production and order manager
- 30: Production Modeler Agent Based Detailed Scheduler; Detailed Production Scheduling

## Claims

1. A method to improve the performance of a distributed scheduler for a manufacturing process comprising in a level at least the activities
- Production Resource Management;
- Production Definition Management
- Detailed Production Scheduling (30)
succeeding operations
**characterised in** by
- providing a decision and prediction function (10) over the activities (30) which carries out an analysis of the variability of the manufacturing process;
- taking the results of said analysis into account while making the actual detailed schedule in the schedulers (30).

2. A method according to claim 1, where
the activities
- Production Resource Management;
- Production Definition Management;
- Detailed Production Scheduling (30)
and the decision and prediction function (10) are in level 3 according to the standard ISA 95.00.03.

3. A method according to claim 1 or 2,
**characterized in** by
the steps
- modeling variability on historical data;
- setting priorities and
- transmitting the priorities to the Detailed Production Scheduling (30).

4. A method according to claim 1 or 2,
**characterized in** by
the steps
- detecting a conflict of done reservations by the decision and prediction function 10 and
- anticipating a reservation by the decision and prediction function 10 and
- transmitting it via a message to the Detailed Production Scheduling (30).

5. A method according to claim 1 or 2,
**characterized in** by
the steps
- detecting a conflict of done reservations by the decision and prediction function 10 and
- anticipating a reservation by the decision and prediction function 10 and
- transmitting it via a message to the Detailed Production Scheduling (30).

6. A method according to claim 1 or 2,
**characterized in** by
the steps
- analyzing the influence of variability through orders path by the decision and prediction function 10 and
- setting scheduling rules for the Production Modeler Agent Based Detailed Scheduler (30) and
- allocating a work order by the Production Modeler Agent Based Detailed Scheduler (30) for a more reliable assembly station.
